# EUROPEAN PATENT APPLICATION

(11) **EP 2 430 915 A1**
(43) Date of publication of application: **21.03.2012**
(21) Application number: 09844603.2
(22) Date of filing: 12.05.2009
(51) Int. Cl.: A01K 63/00

(54) **WATER TANK CLEANER**

(71) Applicant: Kabushiki Kaisha Tominaga Jyushi Kogyosho, Higashiosaka-shi Osaka 577-0025 (JP)
(72) Inventor: NAKAGAWA, Hikaru, Higashiosaka-shi Osaka 577-0025 (JP)
(74) Representative: Viering, Jentschura & Partner
(86) International application number: PCT/JP2009/058841
(87) International publication number: WO 2010/131329

(57) **Abstract**

A water tank cleaner capable of cleaning corners and therearound of the inner wall surface of a water tank. The water tank cleaner is provided with a cleaner body 2 mounted in a water tank, and also with an outer operating member 5 mounted outside the water tank and capable of magnetically attracting the cleaner body 2. The cleaner body 2 is provided with a left and right pair of rocking bodies 3 which is adapted to be rockable between a parallel state in which the pair of rocking bodies 3 is arranged parallel to each other in the left-right direction and a bent state in which one of the rocking bodies 3 is bent to the rear side of the other rocking body 3. When mounted on a flat surface of the inner wall surface of the water tank, the cleaner body 2 is set in the parallel state. When mounted to the corner and therearound between adjacent flat surfaces of the inner wall surface of the water tank, the cleaner body 2 is set to the bent state.

## Description

### TECHNICAL FIELD

The present invention relates to a water tank cleaner for cleaning an inner wall surface of a water tank such as a water tank for ornamental fish.

### BACKGROUND ART

Circumferential walls of a water tank for ornamental fish are formed by transparent glass plates or synthetic resin plates. As a water tank cleaner for cleaning an inner wall surface of such water tank, a water tank cleaner capable of operating from the outside of the water tank by using a magnetic force has been well-known as disclosed in the following Patent Documents 1 to 3.

The water tank cleaner has a cleaner main body in which a magnet is embedded and an outer-side operation member. The cleaner main body and the outer-side operation member are made to adsorb to each other with a magnetic force through a water tank wall. Further, the outer-side operation member is moved along an outer surface of the water tank wall so that the cleaner main body is made to follow the movement of the outer-side operation member and is moved along an inner surface of the water tank wall. With this, the cleaner main body cleans the inner wall surface of the water tank.

### PRIOR ART DOCUMENT

### PATENT DOCUMENTS

Patent Document 1 : Japanese Unexamined Patent Application Publication No. 2002-534067
Patent Document 2: Japanese Unexamined Utility Model Application Publication No. 53-48467
Patent Document 3: Japanese Unexamined Utility Model Application Publication No. 2-98842

### SUMMARY OF THE INVENTION

### PROBLEMS TO BE SOLVED BY THE INVENTION

However, the conventional water tank cleaner as disclosed in Patent Documents 1 to 3 has not been capable of cleaning a corner and therearound between two adjacent flat surfaces of the inner wall surfaces of the water tank. That is to say, the above conventional cleaner main body cannot be arranged at the inner side of the corner so as to be made along an accommodation state thereof. Therefore, the water tank cleaner has not been capable of cleaning the corner and therearound reliably.

It is to be noted that when the cleaner main body is forcibly moved to the corner by a movement operation of the outer-side operation member, there arises the following risk. That is, the outer-side operation member and the cleaner main body are separated from each other and the magnetic force does not act between the outer-side operation member and the cleaner main body, resulting in dropout of the cleaner main body from the inner wall surface.

A preferable embodiment of the present invention has been made in view of the above and other problems in related techniques. The preferred embodiment of the invention makes it possible to significantly improve existing methods and/or apparatuses.

The invention has been made in view of the above problems and an obj ect of the invention is to provide a water tank cleaner capable of cleaning a corner and therearound of inner wall surfaces of a water tank reliably.

Other objects and advantages of the invention will be made obvious from the following preferred embodiment.

### MEANS FOR SOLVING THE PROBLEMS

The present invention includes the following means for solving the above problem.

[1] A water tank cleaner for cleaning an inner wall surface of a water tank according to an aspect of the invention, includes a cleaner main body which is arranged at an inner side of the water tank; and an outer-side operation member which is arranged at an outer side of the water tank and is capable of magnetically adsorbing the cleaner main body through a water tank wall. In the water tank cleaner, the cleaner main body includes a right and left pair of rocking bodies and the rocking bodies are coupled to each other so as to bend between side edges of the pair of rocking bodies, which are opposed to each other, so that the cleaner main body is capable of rocking between a parallel state where the pair of rocking bodies are arranged in parallel in a right-left direction and a bent state where the rocking body at one side is bent to the rear side with respect to the rocking body at the other side, when the cleaner main body is arranged on a flat surface of the inner wall surface of the water tank, the cleaner main body is set to the parallel state and is arranged such that each of front surfaces of the pair of rocking bodies is put into close contact with the inner wall surface, and when the cleaner main body is arranged at a corner and therearound between two adjacent flat surfaces of inner wall surfaces of the water tank, the cleaner main body is set to the bent state and is arranged such that the front surface of the rocking body at one side is put into close contact with the flat surface at one side and the front surface of the rocking body at the other side is put into close contact with the flat surface at the other side.

[2] In the water tank cleaner as recited in the item [1] of the invention, it is preferable that a guiding surface which is guided by the flat surface at the other side and makes the rocking body at the other side rock to the rear side with respect to the rocking body at the one side when the cleaner main body is moved from the flat surface at the one side to the corner be provided on an outer side edge of each rocking body.

[3] In the water tank cleaner as recited in the item [1] or [2] of the invention, it is preferable that the guiding surface be formed by an inclined surface so as to gradually project to the outer side toward the rear side and a projecting edge of the guiding surface at the rear side be formed to be a circular arc surface which is rounded.

[4] In the water tank cleaner as recited in any one of the items [1] to [3] of the invention, it is preferable that engagement surfaces which engage with each other in the bent state so as to hold a state where the rocking body at the other side is arranged at a substantially right angle with respect to the rocking body at the one side be provided on opposing side edges of the pair of rocking bodies.

### EFFECTS OF THE INVENTION

According to the water tank cleaner of the item [1], the cleaner main body includes a right and left pair of rocking bodies which are capable of being bent between a parallel state and a bent state. Therefore, if the cleaner main body is set to the bent state at the corner, the cleaner main body is arranged so as to be adapted to the corner. Accordingly, in this state, the cleaner main body is moved along the inner side of the corner by the movement operation of the outer-side operation member so that the corner can be cleaned reliably.

According to the water tank cleaner of the items [2], [3], when the cleaner main body is moved from a flat surface at one side of two adjacent flat surfaces to the corner between both the flat surfaces, the guiding surface hits against and is guided by the flat surface at the other side. With this, the rocking body at one side can be rocked smoothly in the bending direction and the cleaner main body can be moved to the corner reliably.

According to the water tank cleaner of the item [4], in the bent state, the pair of rocking bodies of the cleaner main body can be arranged at a substantially right angle. Therefore, the cleaner main body can be arranged along the corner accurately so that a cleaning operation can be more easily and reliably performed.

### BRIEF DESCRIPTION OF THE DRAWINGS

Fig. 1 is a perspective view illustrating a state where a water tank cleaner as an embodiment of the invention is arranged on a water tank.
Fig. 2 is a perspective view illustrating the water tank cleaner according to the embodiment.
Fig. 3A is a front view illustrating the water tank cleaner according to the embodiment.
Fig. 3B is a side view illustrating the water tank cleaner according to the embodiment.
Fig. 3C is a plan view illustrating the water tank cleaner according to the embodiment.
Fig. 4 is a perspective view illustrating the water tank cleaner according to the embodiment in an exploded manner.
Fig. 5A is a plan view illustrating a state where the water tank cleaner according to the embodiment is arranged on a flat surface.
Fig. 5B is a plan view illustrating a state where the water tank cleaner according to the embodiment is arranged in the vicinity of a corner.
Fig. 5C is a plan view illustrating a state where the water tank cleaner according to the embodiment is arranged on the corner.

### BEST MODE FOR CARRYING OUT THE INVENTION

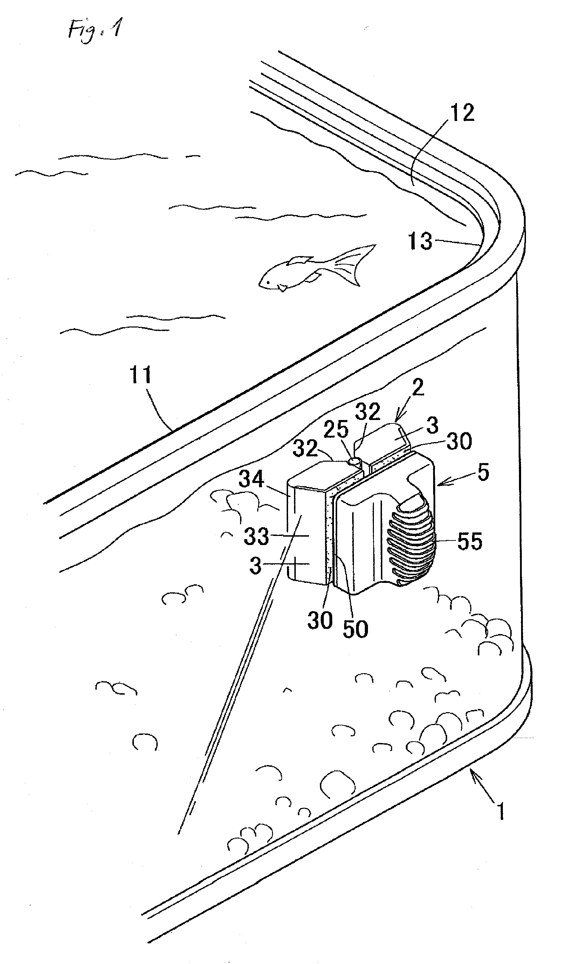

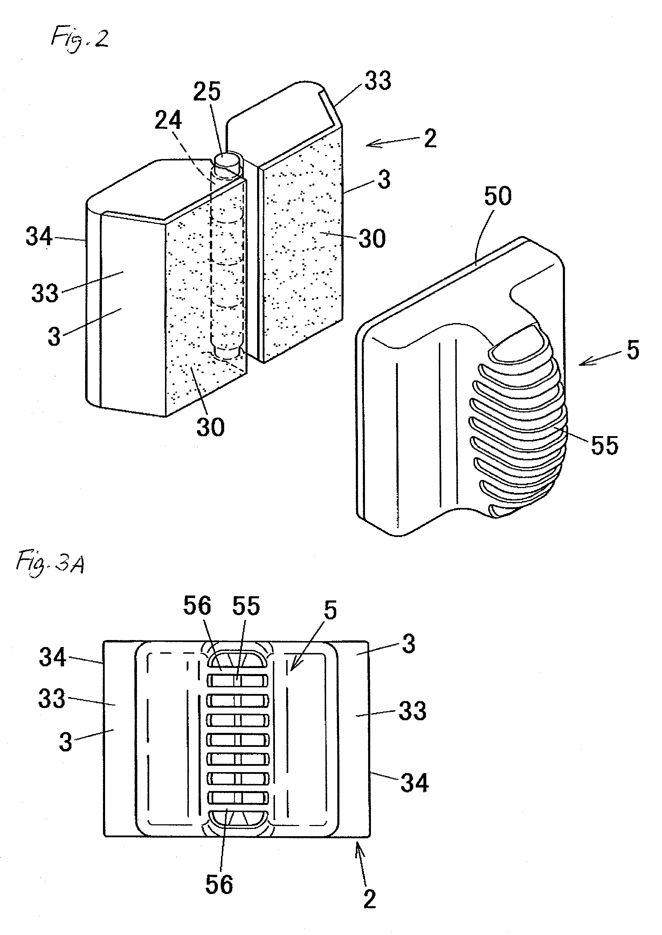

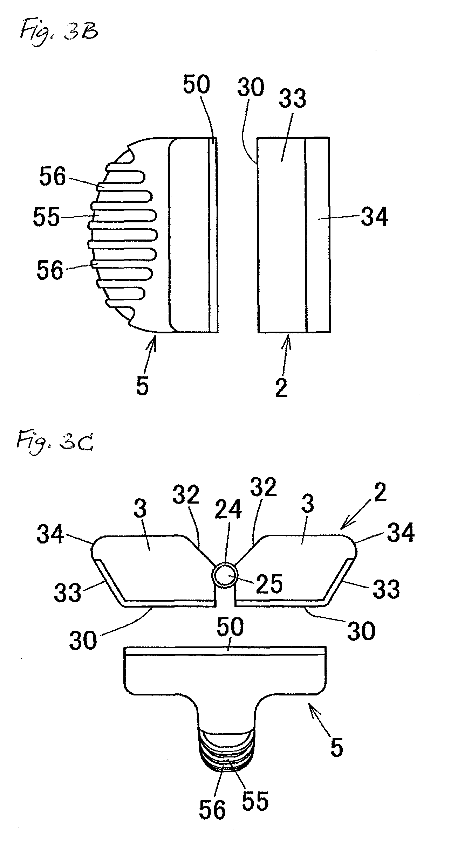

Fig. 1 to Fig. 5 are views illustrating a water tank cleaner according to an embodiment of the invention. As illustrated in these drawings, the water tank cleaner includes a cleaner main body 2 and an outer-side operation member 5. The water tank cleaner is used when an inner wall surface of a glass water tank such as a water tank for ornamental fish is cleaned. In the specification, description is made while an up-down direction facing Fig. 3A is set to a "vertical direction" and a right-left direction facing Fig. 3A is set to a "lateral direction", and an upper side facing Fig. 3C is set to a "rear side" and a lower side facing Fig. 3C is set to a "front side".

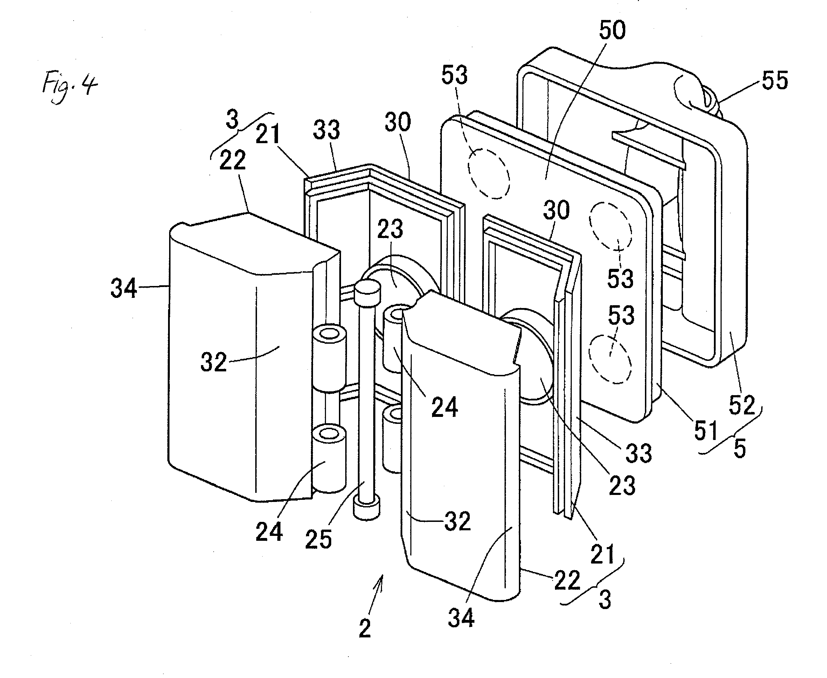

The cleaner main body 2 includes a right and left pair of rocking bodies 3, 3. As illustrated in Fig. 4, each rocking body 3 includes a first member 21 provided at the front side thereof, and a second member 22 provided so as to cover a rear surface side of the first member 21. The first member 21 and the second member 22 are assembled so that the rocking body 3 is formed in a hollow shape having a closed space therein. A permanent magnet 23 is fixed to a rear surface (inner surface) of the first member 21 in the rocking body 3.

A flattened cleaning surface 30 is provided on a front surface of each rocking body 3. Although not illustrated in the drawings, a blush member or a wiping member in a sheet form is bonded to the cleaning surface 30 so as to blush away or wipe away contaminants attached to a wall surface of the water tank. The blush member or the wiping member is formed by woven fabric, non-woven fabric, knitted fabric, pile fabric, or the like.

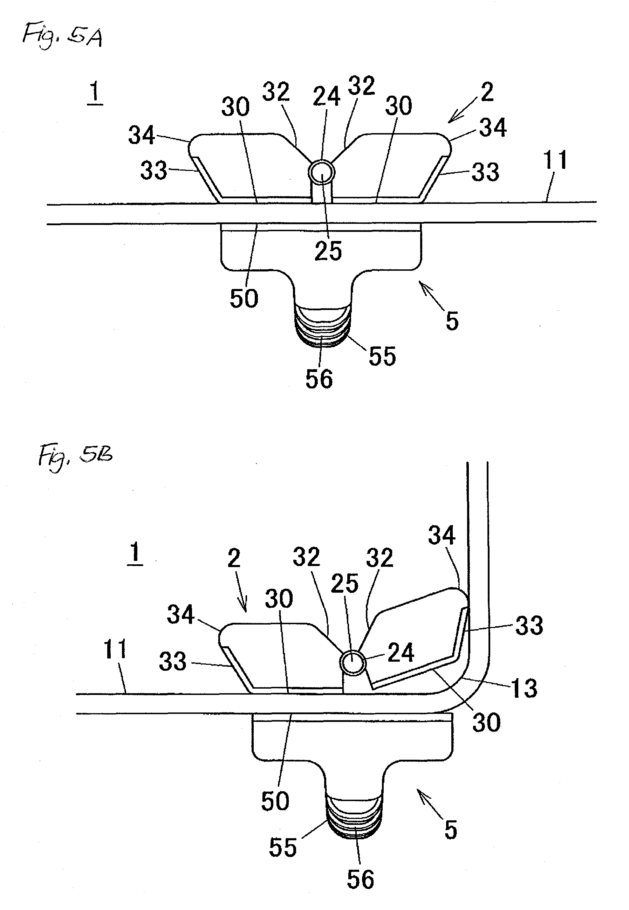

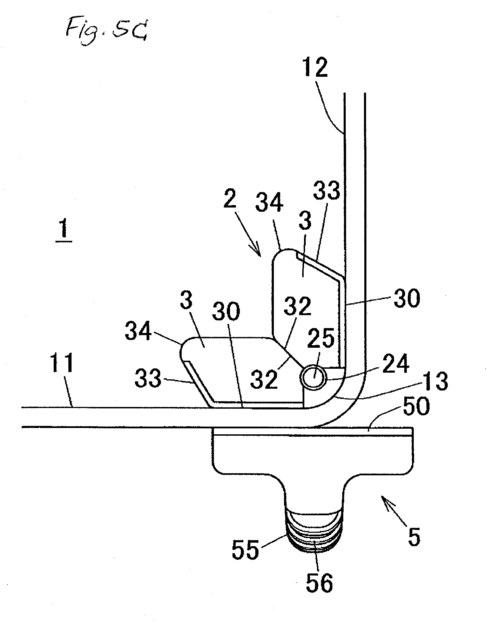

Cylindrical bearings 24 are alternately formed between the pair of the rocking bodies 3, 3 on opposing side end surfaces of the rocking bodies 3, 3. Shaft cores of the cylindrical bearings 24 extend in the vertical direction. A shaft member 25 is inserted and arranged into the bearings 24 in a state where these bearings 24 are alternately arranged in series along the vertical direction. Therefore, both the rocking bodies 3, 3 are configured so as to rotationally rock (bend) about the shaft member 25 arranged along the vertical direction as a bending center line. That is to say, the cleaner main body 2 is configured so as to rock between a parallel state (see, Fig. 5A) and a bent state (see, Fig. 5C). In the parallel state, both the rocking bodies 3, 3 are arranged in parallel in the right-left direction such that the cleaning surfaces 30, 30 thereof are arranged on the same plane. In the bent state, the rocking body 3 at one side is bent to the rear side with respect to the rocking body 3 at the other side and the cleaning surfaces 30, 30 thereof are arranged at a substantially right angle.

It is to be noted that engagement surfaces 32, 32 are provided on opposing side surfaces of both the rocking bodies 3, 3 at the rear sides with respect to the bearings 24 in such a manner that portions between the side surfaces and rear surfaces are chamfered. The engagement surfaces 32, 32 are engaged with each other in the bent state so that both the cleaning surfaces 30, 30 are arranged at a substantially right angle.

Further, guiding surfaces 33, 33 are formed on side surfaces (outer side surfaces) of both the rocking bodies 3, 3 at the rocking sides so as to project to the side toward the rear side from the front side. Projecting edges of the guiding surfaces 33, 33, that is, corners between the guiding surfaces 33, 33 and the rear surfaces, are formed to be circular arc surfaces 34, 34 which are rounded.

It is to be noted that the cleaner main body 2 is formed such that apparent specific gravity is lighter than that of water. When the cleaner main body 2 is put into water in the water tank, the cleaner main body 2 floats on water with buoyancy in a state where a magnetic force does not give an influence thereon.

As illustrated in Fig. 4, the outer-side operation member 5 includes a first member 51 provided at the side (rear side) of a surface opposed to the cleaner main body 2, and a second member 52 provided so as to cover a front surface side of the first member 51. The first member 51 and the second member 52 are assembled so that the outer-side operation member 5 is formed in a hollow shape having a closed space therein. Permanent magnets 53 are fixed to a rear surface (inner surface) of the first member 51 in the outer-side operation member 5. Further, the rear surface of the outer-side operation member 5 is formed as a flat contact surface 50. The permanent magnets 53 and the permanent magnets 23 of the above cleaner main body 2 are attracted to each other with magnetic force so that the contact surface 50 of the outer-side operation member 5 and the front surface (cleaning surfaces 30, 30) of the cleaner main body 2 are adsorbed to each other.

Further, a knob 55 is integrally formed on the second member 52 of the outer-side operation member 5 at the front side. The knob 55 extends along the vertical direction and projects to the front side. The movement operation of the outer-side operation member 5 can be made easily by holding the knob 55 with fingers. It is to be noted that multiple projection strings 56 are integrally formed on an outer circumferential surface of the knob 55 so as not to slip.

Although not illustrated in the drawings, a sheet-form buffering member having flexibility or elasticity is bonded to the contact surface 50 of the outer-side operation member 5. The buffering member prevents cracking on an outer wall surface of the water tank due to contact between the contact surface 50 and the outer wall surface.

Next, described is a case where an inner wall surface of a water tank 1 of which circumferential walls are formed by glass plates is cleaned by using the water tank cleaner according to the embodiment.

As illustrated in Fig. 1 and Fig. 5A, on the inner side of the water tank 1, the cleaner main body 2 is held in a state where the cleaning surfaces 30, 30 are put into close contact with the inner wall surface of the water tank 1. On the other hand, on the outer side of the water tank 1, the contact surface 50 of the outer-side operation member 5 is put into contact with the outer wall surface of the water tank 1 while being opposed to the cleaner main body 2 in the water tank 1. With this, the cleaner main body 2 and the outer-side operation member 5 are magnetically adsorbed to each other through a water tank wall (glass plate) so that the cleaning surfaces 30, 30 of the cleaner main body 2 are held in the state of being in close contact with the inner wall surface of the water tank 1.

In this case, the cleaner main body 2 is arranged such that the shaft member 25 is made along the vertical direction and the pair of rocking bodies 3, 3 are arranged in the parallel state side by side in the right-left direction. The outer-side operation member 5 is arranged such that the knob 55 is made along the vertical direction (perpendicular direction) normally. However, it is needless to say that the outer-side operation member 5 may be arranged such that the knob 55 is made along the lateral direction (horizontal direction).

Then, in this state, the outer-side operation member 5 is moved in the vertical and lateral directions along the outer wall surface of the water tank 1 with the knob 55 being held with fingers. With the operation, the cleaner main body 2 follows the outer-side operation member 5 so as to move along the inner wall surface of the water tank 1. With this, the inner wall surface of the water tank 1 is cleaned.

On the other hand, when a corner 13 and therearound between two adjacent flat surfaces of the inner wall surfaces of the water tank, for example, between one wall inner surface 11 such as a front wall inner surface and the other wall inner surface 12 such as a side wall inner surface, which is arranged perpendicular to the one wall inner surface 11, is cleaned, the cleaner main body 2 is moved to the corner 13 in the following manner. That is, in such a case, the outer-side operation member 5 is moved to the corner 13 along the outer wall surface in a state where the cleaner main body 2 is in close contact with the one wall inner surface 11 so that the cleaner main body 2 is moved to the corner 13 along the one wall inner surface 11.

Then, the circular arc surface 34 at the outer side edge on the preceding rocking body 3 at the right side (the other side) of the cleaner main body 2 is put into contact with the other wall inner surface 12. Thereafter, the cleaner main body 2 is further moved to the other wall inner surface 12 side with the movement operation of the outer-side operation member 5. With this, as illustrated in Fig. 5B, the guiding surface 33 of the rocking body 3 at the right side (the other side) is guided by the other wall inner surface 12 so that the rocking body 3 at the other side is automatically rocked to the rear side. Then, as illustrated in Fig. 5C, the rocking body 3 at the other side is automatically bent to the rear side by 90° with respect to the rocking body 3 at one side in a state where the cleaning surface 30 of the rocking body 3 at the left side (one side) is in close contact with the one wall inner surface 11. Therefore, the cleaning surface 30 of the rocking body 3 at the other side is put into close contact with the other wall inner surface 11. In this manner, the pair of rocking bodies 3, 3 shift from the parallel state to the bent state and the cleaner main body 2 is moved from the one wall inner surface 11 to the corner 13.

The cleaner main body 2 is moved in the vertical direction along the corner 13 by the movement operation of the outer-side operation member 5 in the state where the cleaner main body 2 is arranged along the inner side of the corner 13 as described above. With this, the inner side of the corner 13 can be cleaned reliably.

Further, as illustrated in Fig. 5C, when the cleaner main body 2 is moved from the corner 13 to the other wall inner surface 12 of the water tank 1, the outer-side operation member 5 is made around an outer surface side of the other wall, and then, the outer-side operation member 5 is moved so as to move the cleaner main body 2 in the direction away from the one wall inner surface 11 (for example, to the rear side) along the other wall inner surface 12. With this operation, the rocking body 3 at the one side of the cleaner main body 2 is moved from the one wall inner surface 11 to the other wall inner surface 12 and is magnetically adsorbed by the outer-side operation member 5 so as to be put into close contact with the other wall inner surface 12. In this manner, the pair of rocking bodies 3, 3 automatically shift from the bent state to the parallel state and the cleaner main body 2 is moved from the corner 13 to the other wall inner surface 12.

As described above, the cleaner according to the embodiment can be passed through the corner 13 from the one wall inner surface 11 so as to be moved to the other wall inner surface 12 in a state where the cleaner main body 2 is in close contact with the inner wall surface of the water tank 1. It is to be noted that with the cleaner according to the embodiment, the cleaner main body 2 can be moved in the above manner on any portion between wall surfaces as long as the portion is between adjacent two wall surfaces of the inner wall surfaces of the water tank.

As described above, the water tank cleaner according to the embodiment includes the cleaner main body 2 formed by the right and left pair of rocking bodies 3, 3 which can be bent between the parallel state and the bent state. Therefore, when the cleaner main body 2 is moved to the corner 13 from the one wall inner surface 11 of the inner wall surfaces of the water tank, the pair of rocking bodies 3, 3 are bent so that the cleaner main body 2 is arranged so as to adapt to the inner side of the corner 13. Accordingly, in this state, the cleaner main body 2 is moved along the corner 13 by the movement operation of the outer-side operation member 5 so that the corner 13 can be cleaned reliably.

In particular, according to the embodiment, the guiding surface 33 is formed on the outer edge of each rocking body 3 on the cleaner main body 2. Therefore, when the cleaner main body 2 is moved from the one wall inner surface 11 to the corner 13, the guiding surface 33 hits against and is guided by the other wall inner surface 12. With this, the rocking body 3 at the other side can be rocked smoothly in the bending direction and the cleaner main body 2 can be moved to the corner 13 reliably.

In addition, the projecting edge of each guiding surface 33 is formed to be the circular arc surface 34. Therefore, the circular arc surface 34 abuts against the other wall inner surface 12 first. Accordingly, the rocking body 3 at the one side can be rocked in the bending direction with the circular arc surface 34 more smoothly.

Further, in the embodiment, the engagement surfaces 32, 32 are formed on the inner edges of the pair of rocking bodies 3, 3. The engagement surfaces 32, 32 are engaged with each other in the bent state so that the rocking bodies 3, 3 are arranged at a substantially right angle. Accordingly, both the rocking bodies 3, 3 can be prevented from bending largely beyond 90°. Therefore, the cleaner main body 2 can be arranged on the corner 13 accurately so that a cleaning operation can be more easily and reliably.

Further, with the water tank cleaner according to the embodiment, when the cleaner main body 2 is moved from the corner 13 to a flat surface of the other wall inner surface 12 or the like, the pair of rocking bodies 3, 3 shift from the bent state to the parallel state. That is, both the rocking bodies 3, 3 are arranged in a state of being in close contact with the flat surface. In this manner, the cleaner main body 2 can be moved from the one wall inner surface 11 to the other wall inner surface 12 perpendicular to the one wall inner surface 11 without being taken out to the water surface. Therefore, troublesome operations of taking and putting the cleaner main body 2 out of and into water many times are not required during the cleaning. This makes it possible to perform the cleaning operation easily and reliably.

Further, as already described above, both the rocking bodies 3, 3 are not bent largely beyond 90° in the bent state. Therefore, when the cleaner main body 2 is moved from the corner 13 to the flat surface, both the rocking bodies 3, 3 can be smoothly shifted from the bent state to the parallel state by the adsorbing force of the outer-side operation member 5. Accordingly, the cleaning operation can be more easily and reliably performed.

Further, in the embodiment, specific gravity (apparent specific gravity) of the cleaner main body 2 is adjusted so as to be lighter than that of water. Therefore, even if the cleaner main body 2 is separated from the inner wall surface of the water tank accidentally during the cleaning, and the adsorbing force of the outer-side operation member 5 does not act on the cleaner main body 2 so that the cleaner main body 2 falls down, the cleaner main body 2 comes up to the surface. Accordingly, when the cleaner main body 2 falls down, a user is not required to put his/her hand into water and can take the cleaner main body 2 only with a simple operation of picking up the cleaner main body 2 which comes up to the surface.

In the above embodiment, a case where two rocking bodies 3, 3 are provided has been described as an example. However, the invention is not limited thereto and equal to or more than three rocking bodies may be provided.

Further, it is needless to say that a size of the water tank cleaner according to the invention is not particularly limited and a water tank cleaner having a size which is appropriate to a size of a water tank to be cleaned may be used.

Further, in the invention, sizes, installation numbers, installation positions, adsorbing forces, and the like of the permanent magnets which are provided on the cleaner main body and the outer-side operation member are not particularly limited. Any magnets which are appropriate to desired performance may be used.

Further, in the above embodiment, a case where the glass surface of the glass water tank is cleaned by the water tank cleaner has been described as an example. However, the invention is not limited thereto and the water tank cleaner according to the invention can be applied to a case where a water tank made of a synthetic resin of which water tank walls are formed by transparent synthetic resin plates is cleaned.

Further, terminologies and expressions used in the invention have been used for description. The terminologies and expressions are not intended for limiting interpretation and do not exclude any equivalents of characteristic matters which have been illustrated and described in the specification. That is to say, it should be recognized that various modifications within a claimed range of the invention are also encompassed in the invention.

The invention can be embodied in many different modes. However, it should be considered that the disclosure thereof provides examples of a principle of the invention. The examples are not intended for limiting the invention to the preferred embodiments which have been described and/or illustrated in the drawings in the specification. Under the recognition, multiple embodiments as in the drawings are illustrated in the specification.

Some embodiments of the invention as in the drawings are illustrated in the specification. However, the invention is not limited to various preferred embodiments described herein. Any embodiments including equivalent elements, modifications, deletions, combinations (for example, combinations of characteristics over various embodiments), improvements, and/or variations, which are understood by those skilled in the art based on the disclosure, are encompassed by the invention. Limited matters in claims should be largely interpreted based on terminologies used in the claims and should not be limited to the examples described in prosecutions according to the present specification and application. Such examples should be interpreted to be non-exclusive.

### INDUSTRIAL APPLICABILITY

The water tank cleaner according to the invention can be preferably used when an inner wall surface of a water tank such as a water tank for ornamental fish is cleaned.

### DESCRIPTION OF SYMBOLS

- 1: Water tank
- 11: One wall inner surface (flat surface at one side)
- 12: The other inner surface (flat surface at the other side)
- 13: Corner
- 2: Cleaner main body
- 3: Rocking body
- 32: Engagement surface
- 33: Guiding surface
- 34: Circular arc surface
- 5: Outer-side operation member

## Claims

1. A water tank cleaner for cleaning an inner wall surface of a water tank, comprising:
a cleaner main body which is arranged at an inner side of the water tank; and
an outer-side operation member which is arranged at an outer side of the water tank and is capable of magnetically adsorbing the cleaner main body through a water tank wall,
wherein the cleaner main body includes a right and left pair of rocking bodies and the rocking bodies are coupled to each other so as to bend between side edges of the pair of rocking bodies, which are opposed to each other, so that the cleaner main body is capable of rocking between a parallel state where the pair of rocking bodies are arranged in parallel in a right-left direction and a bent state where the rocking body at one side is bent to the rear side with respect to the rocking body at the other side,
when the cleaner main body is arranged on a flat surface of the inner wall surface of the water tank, the cleaner main body is set to the parallel state and is arranged such that each of front surfaces of the pair of rocking bodies is put into close contact with the inner wall surface, and
when the cleaner main body is arranged at a corner and therearound between two adjacent flat surfaces of inner wall surfaces of the water tank, the cleaner main body is set to the bent state and is arranged such that the front surface of the rocking body at one side is put into close contact with the flat surface at one side and the front surface of the rocking body at the other side is put into close contact with the flat surface at the other side.

2. The water tank cleaner as recited in claim 1, wherein a guiding surface which is guided by the flat surface at the other side and makes the rocking body at the other side rock to the rear side with respect to the rocking body at the one side when the cleaner main body is moved from the flat surface at the one side to the corner is provided on an outer side edge of each rocking body.

3. The water tank cleaner as recited in claim 1 or 2, wherein the guiding surface is formed by an inclined surface so as to gradually project to the outer side toward the rear side and a projecting edge of the guiding surface at the rear side is formed to be a circular arc surface which is rounded.

4. The water tank cleaner as recited in any one of claims 1 to 3,
wherein engagement surfaces which engage with each other in the bent state so as to hold a state where the rocking body at the other side is arranged at a substantially right angle with respect to the rocking body at the one side are provided on opposing side edges of the pair of rocking bodies.
